(19) 

Europäisches
Patentamt

European
Patent Office

Office européen
des brevets

(11) **EP 4 553 487 A1**

(12) **EUROPEAN PATENT APPLICATION**
published in accordance with Art. 153(4) EPC

(43) Date of publication:
**14.05.2025 Bulletin 2025/20**

(21) Application number: **22950349.5**

(22) Date of filing: **08.07.2022**

(51) International Patent Classification (IPC):
**G01N 21/3563** *(2014.01)*   **G01N 21/359** *(2014.01)*
**G01J 3/28** *(2006.01)*   **G06N 3/04** *(2023.01)*
**G06N 3/08** *(2023.01)*   **G01N 21/17** *(2006.01)*
**G01N 21/84** *(2006.01)*

(52) Cooperative Patent Classification (CPC):
**G01J 3/28; G01N 21/17; G01N 21/3563;
G01N 21/359; G01N 21/84; G06N 3/04; G06N 3/08**

(86) International application number:
**PCT/KR2022/009952**

(87) International publication number:
**WO 2024/010123 (11.01.2024 Gazette 2024/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **06.07.2022   KR 20220082902**

(71) Applicant: **Aetech Corporation
Incheon 22689 (KR)**

(72) Inventor: **PARK, Taehyung
Incheon 22689 (KR)**

(74) Representative: **Jung, Minkyu
Wuesthoff & Wuesthoff
Patentanwälte und Rechtsanwalt PartG mbB
Schweigerstraße 2
81541 München (DE)**

(54) **HYPERSPECTRAL IMAGE-BASED WASTE MATERIAL DISCRIMINATION SYSTEM**

(57)   The present invention relates to a hyperspectral image-based waste material discrimination system including: a hyperspectral data acquisition unit for acquiring hyperspectral data on a target object by determining an analysis region from a hyperspectral image of waste, acquired through a hyperspectral sensor; a semi-supervised learning processing model unit for generating integrated data by processing the hyperspectral data through a semi-supervised learning processing model; and a target object material discrimination unit for discriminating the material of the target object through a deep learning model on the basis of the integrated data.

FIG. 1

## Description

## Technical Field

The present invention relates to a waste material discrimination system, and more specifically, to a hyperspectral image-based waste material discrimination system discriminating a waste material using an artificial intelligence model based on a hyperspectral image.

## Background Art

A large amount of waste is produced every day from homes, factories, restaurants, etc., and among general waste, recyclable waste, and food waste, many people separate and throw away food waste.

However, recyclable waste is still being discharged mixed with general waste, and manpower is being directly input to separating it.

In addition, companies that use PET or glass bottles are importing recyclable waste from overseas because recyclable waste may not be properly separated and may be disposed of as general waste.

In Korea, various inventions are being made to address these issues, and in particular, the methods, devices, and systems for separating PET bottles are being filed as patent applications and registered as patents.

For example, Korean Patent No. 10-1270354 entitled "System for Classifying Recyclable Waste" has the advantage of being able to automatically classify waste according to material by imaging the waste.

However, there is an issue that it is difficult to accurately discriminate the material of various pieces of waste using images from vision cameras.

In addition, there have been recent attempts to classify waste using hyperspectral imaging technology and artificial intelligence technology, but the misrecognition rate is very high.

## Technical Problem

A technical task of the present invention is to provide a hyperspectral image-based waste material discrimination system capable of clearly discriminating the materials of waste using a hyperspectral image of the waste and an artificial intelligence model.

## Technical Solution

In order to solve these problems, a hyperspectral image-based waste material discrimination system according to an embodiment of the present invention includes: a hyperspectral data acquisition unit for acquiring hyperspectral data on a target object by determining an analysis region from a hyperspectral image of waste, acquired through a hyperspectral sensor; a semi-supervised learning processing model unit for generating integrated data by processing the hyperspectral data through a semi-supervised learning processing model; and a target object material discrimination unit for discriminating the material of the target object through a deep learning model on the basis of the integrated data.

The hyperspectral data acquisition unit may specify the target object by considering locations of a vision camera and the hyperspectral sensor, and a moving speed and a moving distance of the waste on a conveyor belt, and determine the analysis region of the target object by excluding a portion in which the target object overlaps with other waste.

The hyperspectral data includes labeled data and unlabeled data, and the semi-supervised learning processing model may process the labeled data and the unlabeled data through a principal component analysis network.

The hyperspectral data includes spatial information and spectral information, and the semi-supervised learning processing model unit may generate the integrated data by integrating respective results obtained after training each of the spatial information and the spectral information through the semi-supervised learning processing model.

The deep learning model may use one or more of a convolutional neural network (CNN) and a recurrent neural network (RNN).

The hyperspectral sensor may use near infrared (NIR) or shortwave infrared (SWIR) wavelengths.

In addition to the technical tasks of the present invention mentioned above, other features and advantages of the present invention will be described below, or will be clearly understood by those skilled in the art from such description and explanation.

## Advantageous Effects

According to the present invention as described above, the following effects are achieved.

The present invention can remove noise from hyperspectral data by determining an analysis region of a target object by excluding a portion overlapping with other waste using a hyperspectral image and RGB image overlap technique for the same target object.

The present invention redesigns the semi-supervised learning processing model using both labeled data and unlabeled data as training data for a principal component analysis model, and utilizes both the unlabeled data as well as data on labeled pixel information of the hyperspectral image as input data for the semi-supervised learning processing model, thereby addressing the issue of overfitting due to insufficient training data.

The present invention not only determines the analysis region of the target object by excluding the portion overlapping with other waste, but also separates spatial information and spectral information and then trains each thereof through the semi-supervised learning processing model, thereby accurately discriminating the materials of waste without overfitting using only training data, even with insufficient hyperspectral data.

In addition, other features and advantages of the present invention may be newly recognized through embodiments of the present invention.

## BRIEF DESCRIPTION OF THE DRAWINGS

FIG. 1 is a block diagram illustrating a hyperspectral image-based waste material discrimination system according to an embodiment of the present invention.

FIG. 2 is an exemplary diagram illustrating a hyperspectral data acquisition unit specifying a target object according to an embodiment of the present invention.

FIG. 3 is an exemplary diagram illustrating a hyperspectral data acquisition unit determining an analysis region of a target object according to an embodiment of the present invention.

FIG. 4 is a graph illustrating the normalized near-infrared reflectance spectrum by type of plastic.

FIG. 5 is a diagram illustrating a semi-supervised learning processing model according to an embodiment of the present invention.

FIG. 6 is a diagram illustrating a semi-supervised learning processing model unit generating integrated data according to an embodiment of the present invention.

## DETAILED DESCRIPTION

In the present specification, in adding reference numerals for elements in each drawing, it should be noted that like reference numerals already used to denote like elements in other drawings are used for elements wherever possible.

The terms described in the present specification should be understood as follows.

The singular forms are intended to include the plural forms as well, unless the context clearly indicates otherwise, and the scope of right should not be limited by these terms.

It should be understood that the terms "comprise" or "have" do not preclude the presence or addition of one or more other features, integers, steps, operations, components, elements, or combinations thereof.

As used herein, the term "waste" includes plastics, PET bottles, glass bottles, glass, paper, Styrofoam, general waste, and industrial waste.

Hereinafter, preferred embodiments of the present invention designed to solve the tasks will be described in detail with reference to the accompanying drawings.

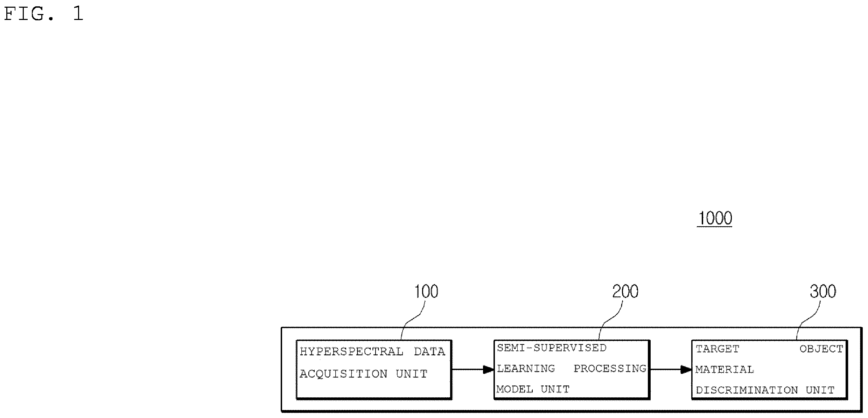

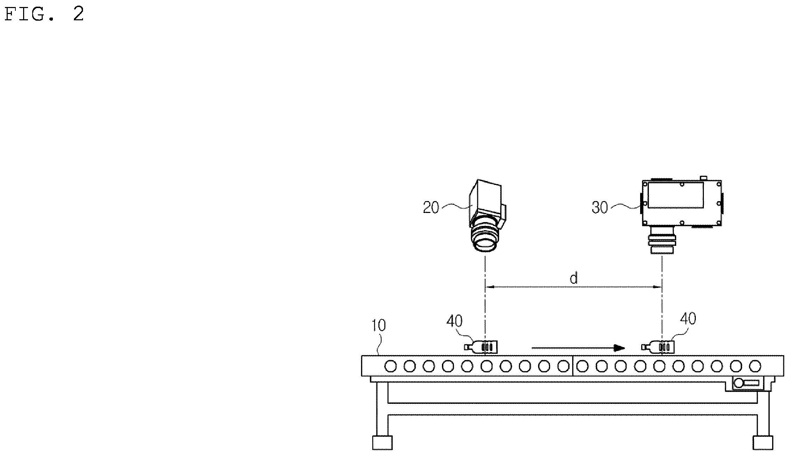

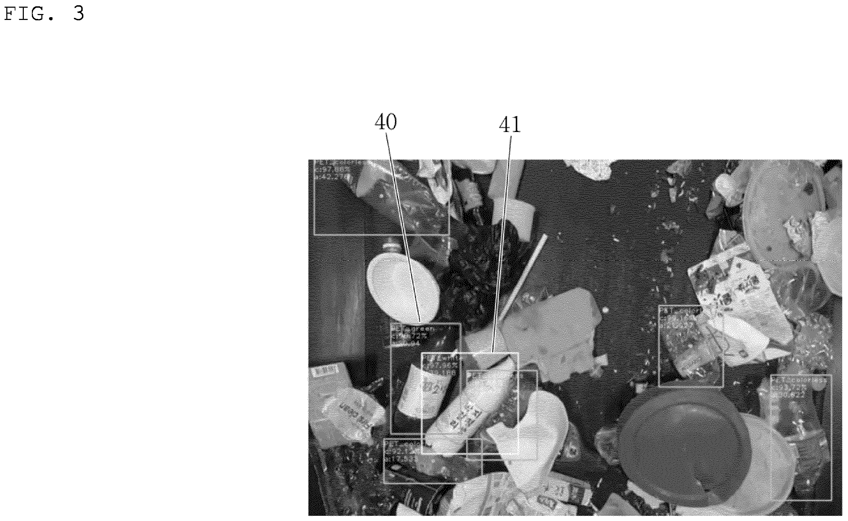

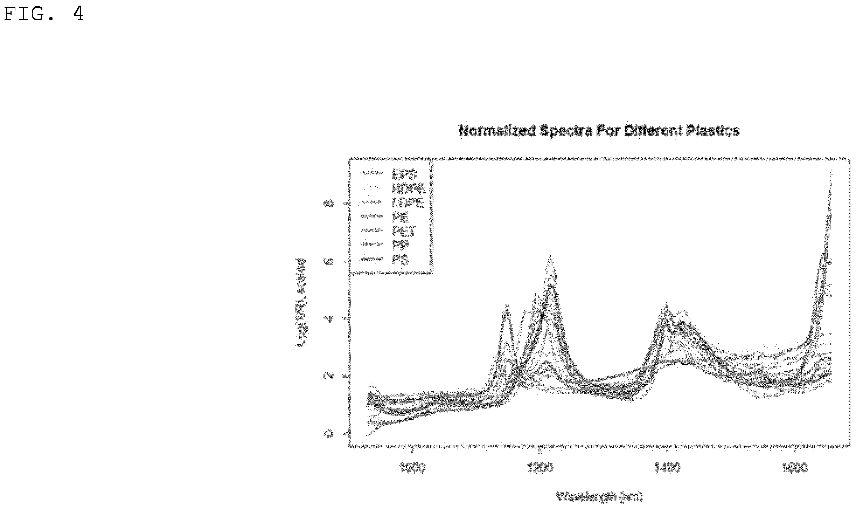

FIG. 1 is a block diagram illustrating a hyperspectral image-based waste material discrimination system according to an embodiment of the present invention. FIG. 2 is an exemplary diagram illustrating a hyperspectral data acquisition unit specifying a target object according to an embodiment of the present invention. FIG. 3 is an exemplary diagram illustrating a hyperspectral data acquisition unit determining an analysis region of a target object according to an embodiment of the present invention. FIG. 4 is a graph illustrating the normalized near-infrared reflectance spectrum by type of plastic.

Referring to FIG. 1, a hyperspectral image-based waste material discrimination system 1000 according to an embodiment of the present invention includes: a hyperspectral data acquisition unit 100 for acquiring hyperspectral data on a target object; a semi-supervised learning processing model unit 200 for generating integrated data by processing the hyperspectral data through a semi-supervised learning processing model; and a target object material discrimination unit 300 for discriminating the material of the target object.

The hyperspectral data acquisition unit 100 according to an embodiment of the present invention may acquire hyperspectral data for the target object by determining the analysis region in a hyperspectral image of waste acquired through a hyperspectral sensor.

The hyperspectral data contains spatial and spectral information of the hyperspectral image. The hyperspectral image has 10 to 100 spectral bands, and the hyperspectral sensor is classified into UV (200-400 nm), VIS (400-600 nm), NIR (700-1,100 nm), SWIR (1.1-2.5 $\mu$m), and MWIR (2.5-7 $\mu$m) according to the spectral range.

Accordingly, the materials of waste may be discriminated more clearly when using a hyperspectral image rather than an RGB image with two spectral bands acquired through a vision camera.

However, there is an issue in that it is difficult to clearly specify a target object only with a hyperspectral image of waste acquired through a hyperspectral sensor. In this regard, the hyperspectral data acquisition unit 100 according to another embodiment of the present invention may determine a target object by overlapping a vision image acquired through a vision camera and a hyperspectral image acquired through a hyperspectral sensor.

Referring to FIG. 2, the hyperspectral data acquisition unit 100 according to another embodiment of the present invention may specify a target object 40 by considering the locations of a vision camera 20 and a hyperspectral sensor 30 and the moving speed of waste 40 on a conveyor 10.

By considering a moving distance (d) of the waste using the locations of the vision camera 20 and the hyperspectral sensor 30 and the moving speed of the conveyor 10, a hyperspectral image may be acquired through the hyperspectral sensor 30 for the same waste captured by the vision camera 20.

Thereafter, referring to FIG. 3, the hyperspectral data acquisition unit 100 according to another embodiment of the present invention may determine the analysis region of the target object 40 excluding the portion in which the target object 40 overlaps with other waste 40.

When a region overlapping with waste is specified as an analysis region, it is difficult to clearly discriminate the material of the target object. However, an embodiment of the present invention uses a hyperspectral image and RGB image overlapping technique for the same target object to determine the analysis region of the target object by excluding the portion overlapping with other waste, thereby removing noise from hyperspectral data.

In addition, referring to FIG. 4, the hyperspectral image-based waste material discrimination system 1000 according to an embodiment of the present invention may clearly discriminate various types of plastic materials using the near-infrared band.

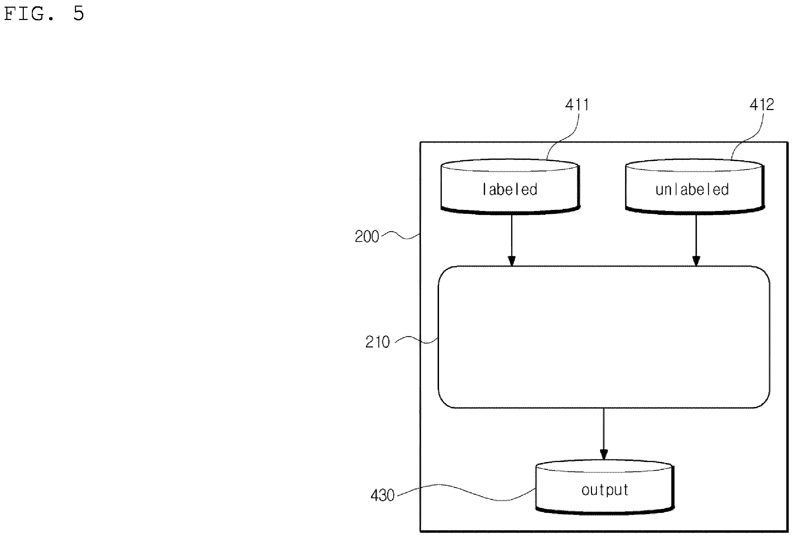

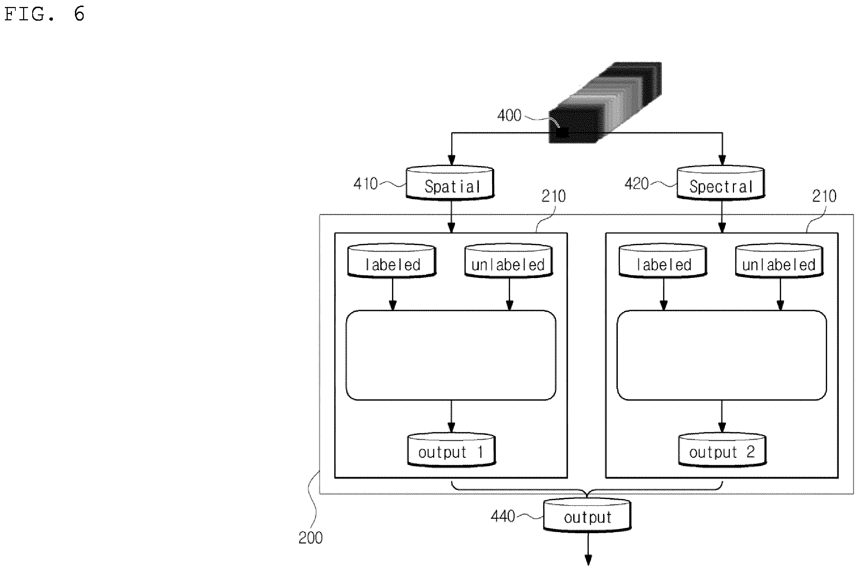

FIG. 5 is a diagram illustrating a semi-supervised learning processing model according to an embodiment of the present invention. FIG. 6 is a diagram illustrating a semi-supervised learning processing model unit generating integrated data according to an embodiment of the present invention.

Referring to FIG. 5, the semi-supervised learning processing model unit 200 according to an embodiment of the present invention may process hyperspectral data 411, 412 through a semi-supervised learning processing model 210 to generate integrated data 430.

When an attempt is made to classify waste using hyperspectral images using an artificial intelligence model according to the related art, there was an issue of overfitting due to insufficient training data.

The hyperspectral image-based waste material discrimination system 1000 according to an embodiment of the present invention may discriminate the material of a target object without overfitting even when insufficient hyperspectral data is used as training data using the semi-supervised learning processing model 210.

The hyperspectral image contains both labeled and unlabeled pixel information.

The semi-supervised learning processing model 210 according to an embodiment of the present invention may use labeled data and unlabeled data in a principal component analysis (PCA) network as training data.

In other words, while the principal component analysis model according to the related art is an unsupervised learning model, in an embodiment of the present invention, using both labeled data and unlabeled data as training data of the principal component analysis model, it may be redesigned as a semi-supervised learning processing model.

Accordingly, the issue of overfitting due to insufficient training data may be addressed by utilizing both unlabeled data as well as data on labeled pixel information of the hyperspectral image as input data.

Although not illustrated, the semi-supervised learning processing model 210 according to an embodiment of the present invention may be configured of an input layer, a convolution layer, and an output layer.

In the principal component analysis model according to the related art, the training data of the input layer is assumed as follows.

$X = \{X_1, X_2, X_3, ..., X_n\}$, and $X_i$ is the ith sample with the size of $\in R^{m \times n}$. For example, when the sample is a spatial information vector, m = 1 and n is the number of bands.

Principal component analysis is a method of summarizing correlated multidimensional data into low-dimensional data. For example, multidimensional data may be converted into two-dimensional data. When multidimensional data is mapped to a single axis, the axis with the greatest variance is decided as the first coordinate axis, and the axis with the second greatest variance is decided as the second coordinate axis. The multidimensional data is mapped onto a plane formed by the first and second coordinate axes.

On the other hand, in the semi-supervised learning processing model 210 according to an embodiment of the present invention, the training data of the input layer may be transformed as follows.

When $Y = [Y^l, Y^u]$, where $Y^l$ is labeled data, and $Y^u$ is unlabeled data, $Y = [Y_1, Y_2, Y_3, ..., Y_{(Nl+Nu)mn}] \in$

$$R^{k_1 \; k_2 \; X \; (N_l + N_u)mn}$$
.

Herein, $N_1$ is the number of labeled pixels and $N_u$ is the number of unlabeled pixels.

Referring to FIG. 6, the semi-supervised learning processing model unit 200 according to another embodiment of the present invention may generate integrated data 440 by integrating results obtained after training hyperspectral data 410, 420 including spatial information 410 and spectral information 420 through the semi-supervised learning processing model 210.

Hyperspectral data containing spatial and spectral information are very large, measuring tens to hundreds of megabytes, and the Hyperspectral data analysis is difficult due to many factors such as mixed pixels in the data, high data redundancy due to high correlation in adjacent bands, variability of hyperspectral signatures, and the curse of the dimensionality, in addition to physical factors such as atmospheric and geometric distortions.

The semi-supervised learning processing model unit 200 according to the other embodiment of the present invention not only determines the analysis region of the target object by excluding the portion overlapping with other waste, but also separates the spatial information and the spectral information and then trains each thereof through the semi-supervised learning processing model 210, thereby enabling the material of the waste to be accurately discriminated without overfitting using only the training data, even with insufficient hyperspectral data.

The target object material discrimination unit 300 may discriminate the material of the target object using the integrated data generated from the semi-supervised learning processing model unit 200 through a deep learning model.

In this connection, the deep learning model may use one or more of a convolutional neural network (CNN) and a recurrent neural network (RNN).

The target object material discrimination unit 300 according to an embodiment of the present invention may input integrated data into the CNN and the RNN configured in parallel, and calculate each probability value derived as an average value.

The convolutional neural network (CNN) is a network that extracts feature values by performing a convolution operation that applies multiple kernels of various window sizes to the pixel vector sequence that passes through an embedding layer.

Unlike the convolutional neural network, the recurrent neural network (RNN) sequentially input the pixel vector sequences generated through the embedding layer into the network for each pixel to extract features. Since the RNN infers newly entered pixels together with the state vector inferred from the previous input sequence, thus extracting feature maps that reflect the features of multiple pixels.

The target object material discrimination unit 300 according to another embodiment of the present invention may input the integrated data into the CNN and the RNN configured in parallel, and instead of merely combining and averaging the derived probability values, may also discriminate the material of the waste by training the same to a new connected network.

As such, the hyperspectral image-based waste material discrimination system according to an embodiment of the present invention may accurately discriminate the material of the target object even with insufficient hyperspectral data.

While the above-described present invention has been described with reference to the exemplary embodiments and the accompanying drawings, it will be apparent to those skilled in the technical field to which the present invention pertains that various substitutions, modifications, and changes may be made without departing from the technical spirit and scope of the present invention.

**Description of Reference Numerals**

100: Hyperspectral data acquisition unit
200: Semi-supervised learning processing model unit
300: Target object material discrimination unit
1000: Hyperspectral image-based waste material discrimination system

**Claims**

1. A hyperspectral image-based waste material discrimination system, comprising:

   a hyperspectral data acquisition unit for acquiring hyperspectral data on a target object by determining an analysis region from a hyperspectral image of waste, acquired through a hyperspectral sensor;
   a semi-supervised learning processing model unit for generating integrated data by processing the hyperspectral data through a semi-supervised learning processing model; and
   a target object material discrimination unit for discriminating the material of the target object through a deep learning model on the basis of the integrated data.

2. The system of claim 1, wherein the hyperspectral data acquisition unit specifies the target object by considering locations of a vision camera and the hyperspectral sensor, and a moving speed and a moving distance of the waste on a conveyor belt, and determine the analysis region of the target object by excluding a portion in which the target object overlaps with other waste.

3. The system of claim 1, wherein the hyperspectral data comprises labeled data and unlabeled data, and wherein the semi-supervised learning processing model processes the labeled data and the unlabeled data through a principal component analysis network.

4. The system of claim 3,

   wherein the hyperspectral data comprises spatial information and spectral information; and
   wherein the semi-supervised learning processing model unit generates the integrated data by integrating respective results obtained after training each of the spatial information and the spectral information through the semi-supervised learning processing model.

5. The system of claim 3, wherein the deep learning model uses one or more of a convolutional neural network (CNN) and a recurrent neural network (RNN).

6. The system of claim 1, wherein the hyperspectral sensor uses near infrared (NIR) or shortwave infrared (SWIR) wavelengths.

FIG. 1

1000

100    200    300

| HYPERSPECTRAL DATA ACQUISITION UNIT | → | SEMI-SUPERVISED LEARNING PROCESSING MODEL UNIT | → | TARGET OBJECT MATERIAL DISCRIMINATION UNIT |

FIG. 2

FIG. 3

FIG. 4

Normalized Spectra For Different Plastics

FIG. 5

EP 4 553 487 A1

FIG. 6

## INTERNATIONAL SEARCH REPORT

| International application No. |
| --- |
| **PCT/KR2022/009952** |

**A. CLASSIFICATION OF SUBJECT MATTER**

**G01N 21/3563**(2014.01)i; **G01N 21/359**(2014.01)i; **G01J 3/28**(2006.01)i; **G06N 3/04**(2006.01)i; **G06N 3/08**(2006.01)i; **G01N 21/17**(2006.01)i; **G01N 21/84**(2006.01)i

According to International Patent Classification (IPC) or to both national classification and IPC

**B. FIELDS SEARCHED**

Minimum documentation searched (classification system followed by classification symbols)

G01N 21/3563(2014.01); G06K 9/20(2006.01); G06K 9/32(2006.01); G06K 9/46(2006.01); G06N 20/00(2019.01); G06N 3/04(2006.01); G06N 3/08(2006.01); G06Q 50/26(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐기물(waste material), 판별(discrimination), 초분광 이미지(hyperspectral image), 딥러닝(deep learning), 컨베이어(conveyor), 라벨(label), 스펙트럼(spectrum), 근적외선(near infrared ray), 단파적외선(short wave infrared ray)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2022-0033940 A (NEXTE&M CO., LTD.) 17 March 2022 (2022-03-17)<br>See paragraphs [0004]-[0018] and figure 1. | 1-6 |
| Y | KR 10-2019-0104485 A (LG ELECTRONICS INC.) 10 September 2019 (2019-09-10)<br>See paragraphs [0095]-[0165]. | 1-6 |
| A | KR 10-2021-0074929 A (SON, Ji Hwan) 22 June 2021 (2021-06-22)<br>See paragraphs [0018]-[0024] and figures 1 and 2. | 1-6 |
| A | KR 10-2022-0060722 A (CHO, Chang-Hwan) 12 May 2022 (2022-05-12)<br>See paragraphs [0062]-[0078] and figures 4 and 5. | 1-6 |
| A | KR 10-1942219 B1 (KO, Jae Sung) 24 January 2019 (2019-01-24)<br>See claim 1 and figures 1-6. | 1-6 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 March 2023** | **24 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/009952**

| Patent document cited in search report | | | Publication date (day/month/year) | Patent family member(s) | | | Publication date (day/month/year) |
|---|---|---|---|---|---|---|---|
| KR | 10-2022-0033940 | A | 17 March 2022 | None | | | |
| KR | 10-2019-0104485 | A | 10 September 2019 | US | 11429822 | B2 | 30 August 2022 |
| | | | | US | 2020-0042822 | A1 | 06 February 2020 |
| KR | 10-2021-0074929 | A | 22 June 2021 | None | | | |
| KR | 10-2022-0060722 | A | 12 May 2022 | None | | | |
| KR | 10-1942219 | B1 | 24 January 2019 | None | | | |

Form PCT/ISA/210 (patent family annex) (July 2022)

**EP 4 553 487 A1**

**Patent documents cited in the description**

- KR 101270354